(19) Europäisches Patentamt
European Patent Office
Office européen des brevets

(11) EP 1 304 811 A1

(12) EUROPEAN PATENT APPLICATION

(43) Date of publication:
23.04.2003 Bulletin 2003/17

(51) Int Cl.7: H03M 13/41

(21) Application number: 02023115.5

(22) Date of filing: 15.10.2002

(84) Designated Contracting States:
AT BE BG CH CY CZ DE DK EE ES FI FR GB GR IE IT LI LU MC NL PT SE SK TR
Designated Extension States:
AL LT LV MK RO SI

(30) Priority: 17.10.2001 JP 2001319003

(71) Applicant: Matsushita Electric Industrial Co., Ltd.
Kadoma-shi, Osaka-fu 571-8501 (JP)

(72) Inventors:
- Ohmi, Shinichiro
Toyono-gun, Osaka-fu 563-0123 (JP)
- Harada, Yasuo
Kobe-shi, Hyogo-ken 651-2274 (JP)
- Ando, Kazuhiro
Hirakata-shi, Osaka-fu 573-0063 (JP)

(74) Representative: Gassner, Wolfgang, Dr.
Patentanwalt,
Nägelsbachstrasse 49a
91052 Erlangen (DE)

(54) **Diversity reception with error correction**

(57) A diversity apparatus includes antennas (1a, 2a), demodulators (2a, 2b), and a Viterbi decoder (3) that has four ACS sections (41-44), and a path memory (5). Signals convolutionally encoded with a constraint length of 3 are received by two antennas (1a, 1b), are demodulated by the demodulating sections (2a, 2b), respectively, and are then outputted to all of the ACS sections (41-44). Such information coming from different routes are subjected to route selection and ACS processing simultaneously, thereby finding a code sequence (expected values) closest to received data sequences (the plurality of received signals). Then, the single path memory (5) is used to store and/or update the paths for error correction, and then corrected data (Dout) is outputted.

FIG. 1

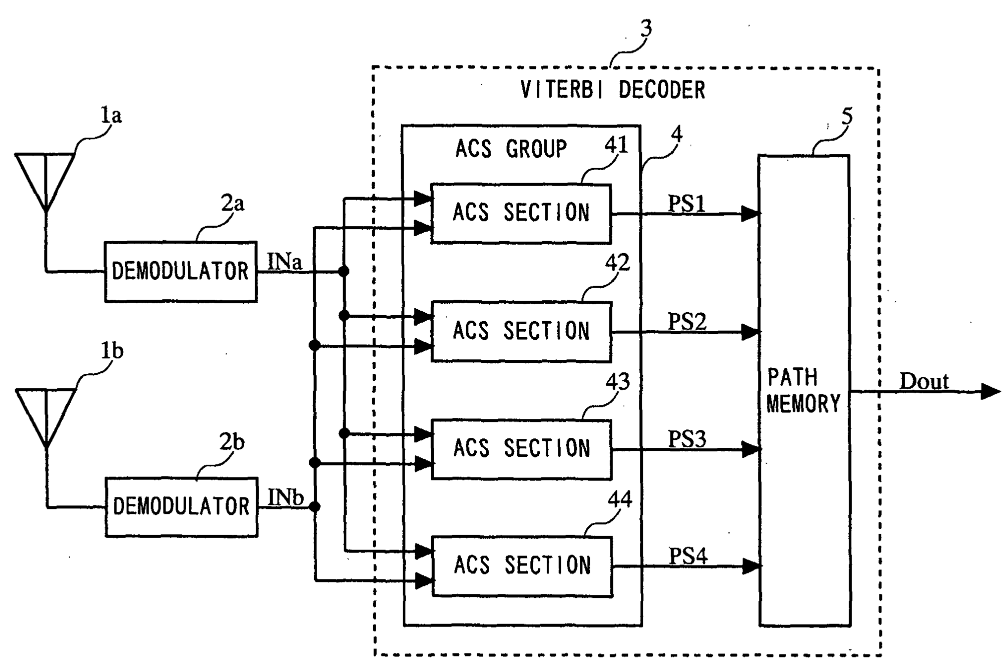


EP 1 304 811 A1

## Description

### BACKGROUND OF THE INVENTION

#### Field of the Invention

The present inventionrelates to a diversity apparatus and a method for correcting errors by using a plurality of pieces of convolutionally-encoded information obtained through different routes.

#### Description of the Background Art

In wireless communications such as ground mobile communications, it is unusual that electric waves emitted from a base station are directly received by a mobile terminal without any obstructions. These waves are usually received as composite waves resulting from diffraction, reflection, etc., due to obstructions such as surrounding buildings. In such cases, as the mobile terminal continuously moves, fading occurs. This is because a phase relation among these composite waves becomes varied. More specifically, when diffracted waves and reflected waves are in phase, a field intensity received by the mobile terminal becomes large. When these waves are in opposite phase, they are cancelled out by each other and the field intensity becomes small. As such, changes in phase relation cause changes in field intensity, leading to fading.

To reduce the effect of such fading, diversity reception has been used. Diversity reception is a technique of receiving an optimum signal from a plurality of received signals. Typical examples of diversity reception are a technique of selecting a signal received by an antenna of a high receiving level (hereinafter referred to as a first technique), and a technique of weighting signals received by antennas in proportion to the receiving level and then combining the weighted signals (hereinafter referred to as a second technique).

When convolutionally-encoded signals are subjected to diversity reception and then Viterbi decoding, the following three schemes are typically used. In a first scheme, a plurality of signals are combined through the above-mentioned second technique, for example, to obtain a single composite signal, and the composite signal is supplied to a Viterbi decoder for decoding (refer to Japanese Patent No. 2556179, for example). In a second scheme, a signal is selected from received signals based on the received field intensity through the above-mentioned first technique, for example, to obtain a single signal, and the selected signal is supplied to a Viterbi decoder for decoding. In a third scheme, received signals are supplied to different Viterbi decoders for decoding, and of the decoded data outputted from the Viterbi decoders, data having no error is selected.

Each of the above three schemes has its drawbacks. In the first scheme, when signals having errors are combined to be a composite signal without these errors detected, decoded data may be deteriorated. In the second scheme, the signal reflected at an obstruction or the like may become large in amplitude, leading to an increase in field intensity. However, the reflected signal may have an error. Therefore, signal selection based on the field intensity does not necessarily give the best results. The third scheme requires Viterbi decoders as many as the number of signals to be received through diversity reception, leading to an increase in number of decoders.

### SUMMARY OF THE INVENTION

Therefore, an object of the present invention is to provide a diversity apparatus and a method of carrying out diversity reception by using a plurality of pieces of convolutionally-encoded information obtained through different routes, and carrying out sophisticated error correction with a small number of decoders.

The present invention has the following features to attain the object mentioned above.

A first aspect of the present invention is directed to a diversity apparatus that receives information subjected to convolutional encoding from different input routes and carries out error correction. The diversity apparatus includes a plurality of receiving sections for receiving signals including the same convolutionally-encoded information from the different input routes, and outputting a plurality of pieces of information; a path selecting section for receiving the plurality pieces of information outputted from the receiving sections, and selecting a path indicative of state transitions of the convolutional encoding and simultaneously selecting one piece of information from the plurality of information; and a single path memory for storing the path selected by the path selecting section and carrying out error correction.

According to the above structure of the present invention, a plurality of pieces of convolutionally-encoded information received through different routes are subjected to route selection and maximum likelihood selection in the path selecting section. Then, only a single path memory is used to store and/or update paths for error correction. That is to say, the diversity apparatus of the first aspect carries out route selection and maximum likelihood selection for error correction, thereby improving error correction capabilities and reducing the number of decoders.

The path selecting section may include a plurality of ACS sections provided correspondingly to states of the convolutional coding. Each of the ACS sections may calculate path metric values corresponding to combinations of paths indicative of the state transitions and the plurality of pieces of information, and may select a path corresponding to a minimum value from the path metric values. The path memory may store the paths selected by the ACS sections correspondingly to the states of the convolutional encoding, and may carry out error correction. The plurality of ACS sections may be coupled to each other in a feedback loop based on the state transitions. Each of the ACS sections may include a plurality of path metric calculating sections provided correspondingly to the combinations of the paths indicative of the state transitions and the plurality of pieces of information; the path metric calculating sections for calculating the path metric values; a minimum path metric selecting section for selecting the minimum value from the path metric values calculated by the path metric calculating sections, and selecting the path corresponding to the minimum value; and a minimum value storage section for temporarily storing the minimum value selected by the minimum path metric selecting section, and outputting the stored minimum value by following the feedback loop. Each of the path metric calculating sections may calculate the path metric value by calculating branch metric values correspondingly to the combinations of the paths indicative of the state transitions and the plurality of pieces of information, and adding, to the branch metric values, the minimum value stored at an immediately preceding time in the minimum value storage section coupled to the feedback loop. With this structure, for each of the pieces of convolutionally-encoded information received through different routes, the ACS section calculates a path metric value correspondingly to the combinations of the path indicative of the state transitions and the pieces of information. Then, a path corresponding to a minimum value of these path metric values is selected as the survivor path. Therefore, each ACS section can easily carry out route selection and maximum likelihood selection simultaneously as well as being able to increase error correction capabilities. Also, it is possible to reduce the number of ACS sections required.

Alternatively, when at least one of the minimum values is equal to or larger than a predetermined value, the minimum value storage section may multiply all of the minimum values selected in the ACS sections by a predetermined factor, and may store the multiplied minimum values. In this case, the minimum values stored in the minimum value storage section is limited by the predetermined value, thereby preventing overflow.

The plurality of pieces of information received by the path selecting section are, for example, reliability information obtained by carrying out predetermined processing on the convolutionally-encoded information received by the receiving sections. In this case, calculation is carried out by using the reliability information obtained for the received convolutionally-encoded information, thereby improving bit-error-rate characteristics.

A second aspect of the present invention is directed to a diversity method for receiving information subject to convolutional encoding from different input routes and carrying out error correction, including: a receiving step of receiving signals including the same convolutionally-encoded information from the different input routes, and outputting a plurality of pieces of information; a path selecting step of using the plurality of pieces of information received in the receiving step to select one of paths indicative of state transitions of the convolutional encoding and to simultaneously select one piece of information from the plurality of pieces of information; and a path storing step of storing the path selected in the path selecting step, and carrying out error correction.

According to the above structure of the present invention, a plurality of pieces of convolutionally-encoded information received through different routes are subjected to route selection and maximum likelihood selection in the path selecting step. Then, In the path storing step, paths are stored and/or updated for error correction. That is to say, the diversity method of the present aspect is used to carry out route selection and maximum likelihood selection for error correction, thereby improving error correction capabilities and reducing the number of steps required for error correction.

The path selecting step may include a path metric calculating step of calculating path metric values corresponding to combinations of paths indicative of the state transitions and the plurality of pieces of information; a minimum path metric selecting step of selecting a minimum value from the path metric values calculated in the path metric calculating step; and a path extracting step of extracting a path corresponding to the minimum value selected in the minimum path metric selecting step. In the path storing step, the path extracted in the path extracting step may be stored correspondingly to a state of the convolutional encoding, and error correction is carried out. Alternatively, the path selecting step may further include a minimum value storing step of storing the minimum value selected in the minimum path metric selecting step, and in the path metric calculating step, path metric values may be calculated by calculating branch metric values corresponding to the combinations of the paths indicative of the state transitions and the plurality of pieces of information, and adding, to the branch metric values, the minimum value stored at an immediately preceding time in the minimum value storing step. With these, for each of the pieces of convolutionally-encoded information received through different routes, a path metric value is calculated in the path metric calculating step correspondingly to the combinations of the paths indicative of the state transitions and the pieces of information. Then, in the minimum path metric selecting step, a minimum value of these path metric values is selected. Therefore, it is possible to easily carry out route selection and maximum likelihood selection simultaneously as well as to increase error correction capabilities.

Alternatively, in the minimum value storing step, when at least one of the minimum values is equal to or larger than a predetermined value, all of the minimum values may be multiplied by a predetermined factor. In this case, the minimum values stored in the minimum value storing step is limited by the predetermined value, thereby preventing overflow.

The plurality of pieces of information used in the path selecting step are, for example, reliability information obtained by carrying out predetermined processing on the convolutionally-encoded information received in the receiving step. In this case, calculation is carried out by using the reliability information obtained for the received convolutionally-encoded information, thereby improving bit-error-rate characteristics.

These and other objects, features, aspects and advantages of the present invention will become more apparent from the following detailed description of the present invention when taken in conjunction with the accompanying drawings.

## BRIEF DESCRIPTION OF THE DRAWINGS

FIG. 1 is a functional block diagram illustrating the construction of a diversity apparatus according to one embodiment of the present invention;
FIG. 2 is a graphical representation of a convolutional encoding generating polynomial with a constraint length of 3;
FIG. 3 is an illustration showing expected values outputted for each state as a result of the generating polynomial represented in FIG. 2;
FIG. 4 is a trellis diagram showing state transitions of convolutional encoding illustrated in FIG. 2;
FIG. 5 is a block diagram illustrating how path metric signals outputted from ACS sections 41-44 illustrated in FIG. 1 are coupled;
FIG. 6 is a block diagram illustrating the internal construction of each of the ACS sections 41-44 illustrated in FIG. 1;
FIG. 7 is an illustration showing the internal construction of a path memory 5 illustrated in FIG. 1 and an outline of updating the survivor path;
FIG. 8 is a flowchart showing the entire operation carried out by the diversity apparatus according to the embodiment of the present invention;
FIG. 9 is a subroutine showing a detailed procedure of step S3 shown in FIG. 8;
FIG. 10 is a subroutine showing a detailed procedure of step S4 shown in FIG. 8; and
FIG. 11 is a graph illustrating a comparison in transmission characteristic between the diversity apparatus of the present invention and the second scheme described in Background Art section, in which received signal selection is carried out based on field intensity for error correction.

## DESCRIPTION OF THE PREFERRED EMBODIMENTS

With reference to FIG. 1, the construction of a diversity apparatus according to one embodiment of the present invention is described. FIG. 1 is a functional block diagram illustrating the construction of the diversity apparatus.

In FIG. 1, for the sake of simplification, the diversity apparatus is described in a case of using a scheme in which QPSK (Quadrature Phase Shift Keying) modulated signals convolutionally encoded with a constraint length of 3 are received by two antennas. In this scheme, the diversity apparatus includes two antennas 1a and 1b, two demodulators 2a and 2b corresponding to the antennas 1a and 1b respectively, and a Viterbi decoder 3. The Viterbi decoder 3 includes an ACS (Add Compare Select) group 4 including four ACS sections 41 through 44, and a path memory 5. The QPSK modulated signals convolutionally encoded with the constraint length of 3 are received by the two antennas 1a and 1b, and are then demodulated by the demodulators 2a and 2b, respectively. Information INa and INb contained in the respective demodulated QPSK signals are both outputted to all of the ACS sections 41 through 44 of the ACS group 4. The ACS sections 41 through 44 each select a path to output path selection signals PS1 through PS4, respectively, to the path memory 5. Based on the path selection signals PS1 through PS4, error-corrected data Dout is outputted from the path memory 5. Note that the path selection signals PS1 through PS4 are hereinafter generally called path selection signals PS.

Here, with reference to FIGS. 2 through 4, convolutional encoding of the constraint length of 3 and Viterbi decoding are described. FIG. 2 illustrates one example of a graphical representation of a convolutional encoding generating polynomial with a constraint length of 3. FIG. 3 is an illustration showing expected values outputted for each state as a result of the generating polynomial represented in FIG. 2. FIG. 4 is a trellis diagram showing state transitions of the convolutional encoding illustrated in FIG. 2.

In convolutional encoding, information is sequentially convolved for encoding. A typical decoding technique for convolutional encoding is Viterbi decoding. In FIG. 2, consider a case where a two-bit convolutional code is produced from a one-bit input. In this case, a two-bit output is obtained from a one-bit input. Therefore, an encoding rate of the convolutional code is 1/2. Also, this convolutional encoding requires three shift registers (denoted as R1 through R3 in FIG. 2), and therefore the constraint length is 3.

The one-bit input first enters the shift register R1, and is then pushed to the shift register R2 and to the shift register R3 by the subsequent inputs into the shift register R1. Codes OUT($\alpha$) and OUT($\beta$) to be outputted are determined by three-bit data in the three shift registers R1 through R3. Specifically, the code OUT($\alpha$) is generated by adding the data in the shift registers R1 through R3 together, while the code OUT ($\beta$) is generated by adding the data in the shift registers R1 and R3.

Here, in the generating polynomial, two inputs to the shift registers R2 and R3 determine the codes OUT(α) and OUT(β) generated from the subsequent input to the shift register R1 which is either 0 or 1. That is, when the generating polynomial is supplied with data to the shift register R1, the two-bit data that have already entered in the shift registers R2 and R3 determine a data state, and the data state determines the codes OUT(α) and OUT(β) generated from the input bit to the shift register R1. In FIG. 3, four states determined by the two-bit data in the shift registers R2 and R3 are denoted as St0, St1 St2, and St3. St0 represents a state in which the data in the shift registers R2 and R3 both indicate 0. St1 represents a state in which the data in the shift register R2 indicates 1 and the data in the shift register R3 indicates 0. St2 represents a state in which the data in the shift register R2 indicates 0 and the data in the shift register R3 indicates 1. St3 represents a state in which the data in the shift registers R2 and R3 both indicate 1. FIG. 3 illustrates the codes OUT(α) and OUT(β) to be outputted for each of the states St0 through St3 when data indicating 0 or 1 is inputted to the shift register R1.

In Viterbi decoding, a received data sequence is observed for calculating a code sequence closest to the data sequences to carry out maximum likelihood selection for error correction. That is, a difference between a plurality of expected values in each of the states St0 through St3 and the received data sequence is detected, and an expected value having the smallest difference is determined as a code sequence closest to the data sequences for error correction. Therefore, the codes OUT(α) and OUT(β) outputted correspondingly to the states St0 through St3 illustrated in FIG. 3 can also be used as expected values outputted correspondingly to the states St0 through St3.

State transitions from the states St0 through St3 can be represented as a trellis diagram illustrated in FIG. 4. In FIG. 4, time t1 and time t2 are laterally aligned to illustrate how each of the states St0 through St3 makes a transition at one encoding. State transitions from the states St0 through St3 are represented by paths. Paths denoted by thick solid lines represent a case where an input indicates 0, while paths denoted by broken lines represent a case where the input indicates 1. Of the above paths, those from the states St0 and St1 (hereinafter referred to as x paths) are each provided with codes with a prefix "x_" , and those from the states St2 and St3 (hereinafter referred to as y paths) are each provided with codes with a prefix "y_" . As evident from the illustration of state transitions from time t1 to time t2, with a one-bit input supplied, the state St0 is changed to the state St0 or St1, the state St1 to the state St2 or St3, the state St2 to the state St0 or St1, and the state St3 to the state St2 or St3.

For example, when viewed at time t2, the paths to the state St0 are the paths x_00 and y_11 only. That is, when the received data sequences are observed and a code sequence closest to the data sequences is calculated through Viterbi decoding in the state St0, codes 00 of the x path and codes 11 of the y path are expected values corresponding to the respective paths. Similarly, expected values in the state St1 are codes 11 of the x path and codes 00 of the y path; those in the state St2 are codes 10 of the x path and codes 01 of the y path; and those in the state St3 are codes 01 of the x path and codes 10 of the y path.

With reference to FIG. 5, couplings of the four ACS sections 41 through 44 provided in the ACS group 4 are described. FIG. 5 is a block diagram illustrating how path metric signals outputted from the ACS sections 41 through 44 are coupled. The path metric signals are described further below. Although the ACS sections 41 through 44 may receive and output signals other than the path metric signals, couplings related to other signals are not described herein for the sake of simplification.

In FIG. 5, as described above, the ACS group 4 includes the four ACS sections 41 through 44. Here, the number of ACS sections 41 through 44 are four because a signal convolutionally encoded with the constraint length of 3 is to be received in the present embodiment. The number of ACS sections provided depends of the number of states in state transitions. Here, the ACS sections 41 through 44 correspond to the states St0 through St3, respectively, being coupled to form a feedback loop based on state transitions represented by the generating polynomial described with reference to FIG. 4. That is, the ACS section 41 is provided correspondingly to the state St0 to output a path metric signal PM1 as an x-path metric signal PMx to the ACS sections 41 and 42. The ACS section 42 is provided correspondingly to the state St1 to output a path metric signal PM2 as the x-path metric signal PMx to the ACS sections 43 and 44. The ACS section 43 is provided correspondingly to the state St2 to output a path metric signal PM3 as a y-path metric signal PMy to the ACS sections 41 and 42. The ACS section 44 is provided correspondingly to the state St3 to output a path metric signal PM4 as the y-path metric signal PMy to the ACS sections 43 end 44 . The path metric signals PM1 through PM4 are generally hereinafter referred to as path metric signals PM.

Next, with reference to FIG. 6, the internal construction of each of the ACS sections 41 through 44 is described. FIG. 6 is a block diagram showing the internal construction of each of the ACS sections 41 and 44. Here, as described above, the information INa and INb contained in the respective QPSK signals demodulated by the demodulators 2a and 2b are outputted to the ACS sections 41 through 44. Hereinafter, to make description more specific, the codes OUT(α) and OUT(β) convolutionally encoded with the constraint length of 3 and produced through the generating polynomial described with reference to FIG. 2 are received as inputs IN(α) and IN (β), respectively. In the following description, demodulation results outputted from the demodulator 2a are called information INa(α) and INa(β), and those outputted from the demodulator 2b are called information INb(α) and INb(β). Note that the codes OUT(α) and OUT (β) indicate data of either 1 or 0, but the inputs IN(a) and IN(β) may not necessarily indicate data of 1 or 0, due to deterioration in the course of transmission or reception, or other factors. For example, data initially indicating 1 may be deteriorated to 0.7 or 0.8, or data initially indicating 0 may be deteriorated to 0.1 or 0.2. In the present invention, even when such deteriorated inputs IN(α) and IN(β) are received, the demodulators 2a and 2b demodulate these inputs to produce the information INa(α), INa (β), INb(α), and INb(β). Note that so-called reliability information obtained through predetermined processing may be used as the information INa and INb.

In FIG. 6, each of the ACS sections 41 through 44 includes four metric calculating units 401 through 404, a minimum path metric selecting unit 450, and a path metric storage unit 460. Each of the metric calculating units 401 through 404 calculates a temporary path metric value PMtmp based on any of the corresponding states St0 through St3 and the information INa or INb and the path metric signal PMx or PMy. Specifically, to calculate a difference between the information INa and the expected values of the x path, the metric calculating unit 401 calculates branch metrics by using expected values EVx corresponding to the states St0 through St3, and adds the calculated branch metrics to the received path metric PMx to obtain a temporary path metric value PMtmp1. This can be represented by the following equation:

$$\{EVx(\alpha) - INa(\alpha)\}^2 + \{EVx(\beta) - INa(\beta)\}^2 + PMx.$$

Then, the obtained path metric value PMtmp1 is outputted to the minimum path metric selecting unit 450. To calculate a difference between the information INa and the expected values of the y path, the metric calculating unit 402 calculates branch metrics by using expected values EVy corresponding to the states St0 through St3, and adds the calculated branch metrics to the received path metric PMy to obtain a temporary path metric value PMtmp2. This can be represented by the following equation:

$$\{EVy(\alpha) - INa(\alpha)\}^2 + \{EVy(\beta) - INa(\beta)\}^2 + PMy.$$

Then, the obtained path metric value PMtmp2 is outputted to the minimum path metric selecting unit 450. To calculate a difference between the information INb and the expected values of the x path, the metric calculating unit 403 calculates branch metrics by using expected values EVx corresponding to the states St0 through St3, and adds the calculated branch metrics to the received path metric PMx to obtain a temporary path metric value PMtmp3. This can be represented by the following equation:

$$\{EVx(\alpha) - INb(\alpha)\}^2 + \{EVx(\beta) - INb(\beta)\}^2 + PMx.$$

Then, the obtained path metric value PMtmp3 is outputted to the minimum path metric selecting unit 450. To calculate a difference between the information INb and the expected values of the y path, the metric calculating unit 404 calculates branch metrics by using expected values EVy corresponding to the states St0 through St3, and adds the calculated branch metrics to the received path metric PMy to obtain a temporary path metric value PMtmp4. This can be represented by the following equation:

$$\{EVy(\alpha) - INb(\alpha)\}^2 + \{EVy(\beta) - INb(\beta)\}^2 + PMy.$$

Then, the obtained path metric value PMtmp4 is outputted to the minimum path metric selecting unit 450.

Here, the expected values EVx or EVy corresponding to the states St0 through St3 used in the metric calculating units 401 through 404 are similar to those described for the state transitions illustrated in FIG. 4. That is, the expected values EVx of the x path and the expected values EVy of the y path corresponding to the state St0 to be used in the metric calculating units 401 through 404 of the ACS section 41 are as follows: Evx (α) = 0, EVx(β) = 0, EVy(α) = 1, and EVy(β) = 1. Also, those corresponding to the state St1 to be used therein are as follows: Evx(α) = 1, EVx(β) = 1, EVy(α) = 0, and EVy(β) = 0. Furthermore, those corresponding to the state St2 to be used therein are as follows: Evx(α) = 1, EVx(β) = 0, EVy(α) = 0, and EVy(β) = 1. Still further, those corresponding to the state St3 to be used therein are as follows: Evx(α) = 0, EVx(β) = 1, EVy(α) = 1, and EVy(β) = 0. For each of the plurality of expected values in the states St0 through St3, a difference from the received data sequence is detected by the metric calculating units 401 through 404.

The minimum path metric selecting unit 450 selects a minimum value from the four temporary path metric values PMtmp1 through PMtmp4 as a new path metric PM, and outputs it to the path metric storage unit 460. The minimum path metric selecting unit 450 also outputs a path selection signal PS indicating a path (x-path or y-path) that corresponds to the new path metric PM to the path memory 5. Here, the path selection signals PS outputted from the ACS sections 41 through 44 correspond to the path selection signals PS1 through PS4, respectively (refer to FIG. 1). Also, when the new path metric PM exceeds a predetermined value, the minimum path metric selecting unit 450 enables an excess signal Sor. Note that the excess signals Sor outputted from the ACS sections 41 through 44 are OR-ed together, and are coupled as a limit signal Slm to all of the path metric storage units 460 of the ACS sections 41 through 44.

The path metric storage unit 460 temporarily stores the new path metric PM outputted from the minimum path metric selecting unit 450 for the subsequent metric calculation. Note that, if the above limit signal Slm indicates that at least one of the excess signals Sor outputted from the ACS sections 41 through 44 has been enabled, the new path metric PM is first multiplied by 1/2 and then stored. With this, path metric overflow in the path metric storage unit 460 and in the subsequent steps can be prevented. Then, the path metric storage unit 460 outputs the path metric PM stored therein by following the coupling that has been described in FIG. 5. Note that the path metrics PM outputted from the ACS sections 41 through 44 correspond to the path metrics PM1 through PM4.

Next, with reference to FIG. 7, the internal construction of the path memory 5 is described. FIG. 7 is an illustration showing the internal construction of the path memory 5 illustrated in FIG. 1 and an outline of updating a survivor path. The construction of the path memory 5 is similar to a path memory of a general Viterbi decoder.

In FIG. 7, the path memory 5 includes selected path storage sections 51 through 54 for storing the selected paths in accordance with the states St0 through St3. Each of the selected path storage sections 51 and 54 has a path storage depth m that is five times or more longer than the constraint length. For example, when the constraint length is 3, the path storage depth m of each of the selected path storage sections 51 through 54 is 15 bits or longer. The selected path storage sections 51 through 54 are provided correspondingly to the states St0 through St3, and are supplied with the pass selection signals PS1 through PS4.

Supplied with the path selection signals PS1 through PS4, the selected path storage sections 51 through 54 of the path memory 5 updates, at time t1 in FIG. 7, the survivor path based on the paths (x-path(s) and/or y-path(s))indicated by the received path selection signals PS1 through PS4. Specifically, when the selected path storage section 51 receives the path selection signal PS1 indicating selection of an x-path, the selected path storage section 51 is updated in a manner that data of one bit is excluded from the end of data of m bits stored in a storage area of the selected path storage section 51 and the obtained data of (m-1) bits is stored in the storage area with one bit at its head excluded therefrom. On the other hand, when the selected path storage section 51 receives the path selection signal PS1 indicating selection of a y-path, the selected path storage section 52 is updated in a manner that data of one bit is excluded from the end of data of m bits stored in the storage area of the selected path storage section 51 and the obtained data of (m-1) bits is stored in a storage area of the selected path storage section 52 with one bit at its head excluded therefrom. Also, when the selected path storage section 52 receives the path selection signal PS2 indicating selection of an x-path, the selected path storage section 53 is updated in the above-described manner. When the selected path storage section 52 receives the path selection signal PS2 indicating selection of a y-path, the selected path storage section 54 is updated in the above-described manner. Furthermore, when the selected path storage section 53 receives the path selection signal PS3 indicating selection of an x-path, the selected path storage section 51 is updated in the above-described manner. When the selected path storage section 53 receives the path selection signal PS3 indicating selection of a y-path, the selected path storage section 52 is updated in the above-described manner. Still further, when the selected path storage section 54 receives the path selection signal PS4 indicating selection of an x-path, the selected path storage section 53 is updated in the above-described manner. When the selected path storage section 54 receives the path selection signal PS4 indicating selection of a y-path, the selected path storage section 54 is updated in the above-described manner. Then, 0 is stored in the storage area of one bit located at the head of each of the selected path storage sections 51 and 53, while 1 is stored in the storage area of one bit located at the head of each of the selected path storage sections 52 and 54. The above-described updating scheme is based on the state transitions described with reference to FIG. 4. After the updating processing of the path memory 58 is completed, the path memory 5 outputs, at time t2 in FIG. 7, the oldest data of one bit stored at the end of the selected path storage section 51 as corrected data Dout.

Next, with reference to FIG. 8, the entire operation carried out by the diversity apparatus for receiving and decoding convolutionally-encoded QPSK modulated signals is described. FIG. 8 is a flowchart showing the entire operation carried out by the diversity apparatus.

In FIG. 8, the plurality of antennas included in the diversity apparatus receive a plurality of convolutionally-encoded modulated signals (step S1). The signals received in step S1 are demodulated by the respective demodulators provided in the diversity apparatus, and are then outputted to the Viterbi decoder (step S2). Here, in the example illustrated in FIG. 1, the outputs in step S2 correspond to the information INa and INb outputted to the Viterbi decoder 3 after reception by the two antennas 1a and 1b, and respective demodulation by the demodulators 2a and 2b. In these steps S1 and S2, if the antennas and the demodulators are provided as many as the number of signals to be subjected to diversity reception, a desired number of pieces of information can be supplied to a single Viterbi decoder.

Next, in the ACS group provided in the diversity apparatus, ACS processing is carried out on the inputted plurality of signals, and a path selection signal is outputted from the respective ACS sections provided in the ACS group (step S3). The ACS group includes as many ACS sections as the number of states occurring in relation to the constraint length used for convolutional encoding. Also, path metric signals outputted from the respective ACS sections are coupled with each other based on state transitions represented by the generating polynomial. For example, in the example of FIG. 1, the constraint length is assumed to be 3. Under this assumption, the ACS group 4 includes the four ACS sections 41 through 44, and are coupled with each other in a feedback loop as illustrated in FIG. 5. For QPSK modulated signals convolutionally encoded with a constraint length of 7, which is generally used, 64 ACS sections are provided, and path metric signals outputted from the respective ACS sections are coupled with each other in a feedback loop based on state transitions represented by the generating polynomial. The operation in step S3 is described further below in detail.

Next, the path memory included in the diversity apparatus carries out path memory processing based on the path selection signals outputted in step S3 (step S4). The operation in step S4 is described further below in detail.

Next, the diversity apparatus outputs the oldest data of one bit as corrected data to the selected path storage section of the path memory corresponding to the state St0 (step S5). Then, the diversity apparatus determines whether to end decoding based on, for example, a dummy bit for termination of decoding (step S6). If it is determined to continue encoding, the procedure returns to step S1 for further processing. If it is determined to end encoding, the procedure according to the flowchart ends.

Next, with reference to FIG. 9, the detailed operation of ACS processing in step S3 is described. FIG. 9 is a subroutine showing the detailed procedure of step S3 of FIG. 8. As described above, the ACS group includes as many ACS sections as the number of states occurring in relation to the constraint length used for convolutional encoding, but each ACS section operates similarly. Therefore, only the operation of one ACS section is described herein.

In FIG. 9, as to a plurality of pieces of input information demodulated in step S2, the ACS section uses an expected value for each path based on a state transition corresponding to the ACS section to calculate temporary path metric value (step S31). For this operation, a plurality of received data sequences are first observed. Then, in order to calculate a code sequence closest to the data sequences, a branch metric is calculated for each piece of received information and each combination of paths in state transitions. Then, to the branch metric, the immediately-preceding path metric value corresponding thereto is added. For example, in the example described with reference to FIG. 6, the number of pieces of received information is two (INa and INb), and the number of state transition paths is two (x-path and y-path), thus the number of combinations of those is four. Accordingly, four metric calculating units 401 through 404 are provided. The four metric calculating units 401 through 404 each calculate a difference between the received data sequence and the expected values as a branch metric, and add, to the branch metric, the path metric value calculated at the immediately preceding time and supplied through the above-stated feedback loop, thereby calculating temporary path metric values PMtmp1 through PMtmp4. When the number of pieces of information to be received is n, n $\times$ 2 metric calculating units are provided to each ACS section for each combination of n pieces of information and two state transition paths to calculate temporary path metric values. That is, the diversity apparatus of the present invention carries out ACS processing on a plurality of received signals received by only a single ACS section. A scheme for calculating the path metric values is similar to that which has been described with reference to FIG. 6, and therefore is not described herein.

The minimum path metric selecting unit included in the ACS section selects a minimum value from the temporary path metric values calculated in step S31, and detects a path indicating the minimum value (step S32). This step S32 makes it possible to observe the plurality of received data sequences based on state transitions corresponding to the ACS sections and to calculate a code sequence (expected value) closest to the data sequences.

Next, the minimum path metric selecting unit determines whether the minimum value selected in step S32 is smaller than a predetermined value (step S33). Determination in step S33 is carried out in every ACS section, and all determination results are OR-ed. If the minimum value in every ACS section is smaller than the predetermined value, the minimum value calculated in step S32 is stored as a new path metric in the path metric storage unit (step S34), and the procedure goes to the next step S36. On the other hand, if it is determined in step S33 that the minimum value of at least one ACS section is equal to or larger than the predetermined value, the minimum value calculated in step S32 is multiplied by 1/2 to obtain a new path metric, and the new path metric is then stored in the path metric storage unit (step S35). The procedure then goes to the next step S36. The operation of step S35 is to prevent overflow of the path metric storage unit. As described above, the minimum value is calculated by the ACS section by observing the received data sequences and finding a difference between each data sequence and the code sequence closest thereto. Therefore, the minimum value always has a positive value, and that positive value is added in the subsequent calculation. That is, the minimum value is cumulatively increased if a difference occurs between the data sequence and the code sequence closest thereto. To prevent such an increase, the present diversity apparatus sets a predetermined value, and if at least one minimum value is equal to or larger than the predetermined value, all of the minimum values are multiplied by 1/2. This multiplication by 1/2 is not meant to be restrictive, and any operation may be used to obtain the above effect as long as all of the minimum values stored in the path metric storage unit can be reduced at the same ratio.

In the next step S36, the minimum path metric selecting unit outputs the path indicating the minimum value selected in step S32 (x-path or y-path) as a path selection signal to the path memory, and then the subroutine ends. Note that, as described above, this subroutine is similarly carried out by all of the ACS sections of the diversity apparatus, and therefore each ACS section outputs a path selection signal according to its state transition.

As such, in ACS processing of the present invention, ACS sections are provided according to the state of the received convolutionally-encoded signal. In each ACS section corresponding to the state, a code sequence (expected values) closest to the plurality of received signals can be calculated. That is, with the above-described ACS processing, route selection is carried out based on the plurality of signals and, simultaneously, a code sequence (expected values) is found. The results are outputted to the path memory.

Next, with reference to FIG. 10, the processing carried out by the path memory shown in step S4 is described in detail. FIG. 10 is a detailed subroutine of step S4 of FIG. 8.

As described above, the path memory of the diversity apparatus includes a plurality of selected path storage sections as storage areas according to each state of transition. The selected path storage sections are coupled to each other so that each is supplied with the path selection signal outputted from the ACS section provided according to the state. For example, in the example of FIG. 7, four selected path storage sections 51 through 54 are provided correspondingly to the states St0 through St3, respectively. The selected path storage sections 51 through 54 are supplied with the path selection signals PS1 through PS4 outputted from the ACS sections 41 through 44 provided correspondingly to the states St0 through St3, respectively. Therefore, for QPSK modulated signals convolutionally encoded with a constraint length of 7, which are generally used, 64 selected path storage sections are provided, and are supplied with path selection signals outputted from 64 ACS sections correspondingly to the respective states.

In FIG. 10, the path memory receives the path selection signals outputted in step S36 from the ACS sections (step S41). Then, as described above, each selected path storage section determines the path designated by the received path selection signal (step S42).

Each selected path storage section then updates the survivor path stored therein according to the indicated path (step S43). Update processing in step S43 is carried out based on state transitions corresponding to the selected path storage sections. A specific scheme for updating is similar to that described with reference to FIG. 7, and is therefore not described herein.

Each selected path storage section stores predetermined data (0 or 1) in a storage area of one bit at its head (step S44), and then the subroutine ends. The predetermined data is stored in step S44 according to the state corresponding to each selected path storage section. A specific scheme for storage is similar to that described with reference to FIG. 7, and is therefore not described herein.

As such, the diversity apparatus of the present invention includes a single path memory to enable maximum likelihood selection from a plurality of received signals for error correction. That is, it is possible to construct a diversity apparatus with only a single Viterbi decoder, thereby achieving a small-sized apparatus.

With reference to FIG. 11, transmission characteristics of the diversity apparatus of the present invention are described. FIG. 11 is a graph illustrating a comparison in transmission characteristic between the diversity apparatus of the present invention and the second scheme described in the Background Art section, in which received signal selection is carried out based on field intensity for error correction. The graph illustrated in FIG. 11 represents a bit error rate (BER) with respect to a signal-to-noise (SN) ratio. As is evident from FIG. 11, compared with the conventional second scheme, the diversity apparatus of the present invention has an error correction capability which is higher by approximately 2 to 3 dB.

As described above, in the diversity apparatus of the present invention, a plurality of pieces of information from different routes are subjected to route selection and ACS processing by the ACS sections, a code sequence (expected values) closest to the plurality of received signals is found, and storage and/or update of the paths are carried out by a single path memory for error correction. That is, in the diversity apparatus of the present invention, only a single Viterbi decoder is used for simultaneously carrying out route selection and maximum likelihood selection for error correction. This makes it possible to improve error correction capability and to reduce the number of Viterbi decoder required. Also, the path metric value to be stored in the path metric storage unit is limited by the predetermined value, thereby preventing overflow.

A diversity apparatus that receives a plurality of convolutionally-encoded wireless signals at antennas has been described above. The present invention is, however, not meant to be restricted to wireless communications. Needless to say, the present invention can also achieve a diversity apparatus for carrying out error correction on a plurality of signals transmitted through wired communications.

While the invention has been described in detail, the foregoing description is in all aspects illustrative and not restrictive. It is understood that numerous other modifications and variations can be devised without departing from the scope of the invention.

**Claims**

1. A diversity apparatus that receives information subjected to convolutional encoding from different input routes and carries out error correction, comprising:

    a plurality of receiving sections (1a, 1b 2a, 2b) for receiving signals including the same convolutionally-encoded information from the different input routes, and outputting a plurality of pieces of information (INa, INb);
    a path selecting section (4) for receiving the plurality pieces of information (INa, INb) outputted from the receiving sections (1a, 1b 2a, 2b), and selecting a path indicative of state transitions of the convolutional encoding and simultaneously selecting one piece of information from the plurality of information (INa, INb); and
    a single path memory (5) for storing the path selected by the path selecting section (4) and carrying out error correction.

2. The diversity apparatus according to claim 1, wherein
    the path selecting section (4) includes a plurality of ACS sections (41-44) provided correspondingly to states (St0-St3) of the convolutional encoding,
    each of the ACS sections (41-44) calculates path metric values (PMtmp1-PMtmp4) corresponding to combinations of paths indicating the state transitions and the plurality of pieces of information (INa, INb), and selects a path corresponding to a minimum value (PM) from the path metric values (PMtmp1-PMtmp4); and
    the path memory (5) stores the paths selected by the ACS sections (41-44) correspondingly to the states (St0-St3) of the convolutional encoding for error correction.

3. The diversity apparatus according to claim 2, wherein
    the plurality of ACS sections (41-44) are coupled to each other in a feedback loop based on the state transition,
    each of the ACS sections (41-44) includes
    a plurality of path metric calculating sections (401-404) provided correspondingly to the combinations of the paths indicative of the state transitions and the plurality of pieces of information (INa, INb), the path metric calculating sections (401-404) for calculating the path metric values (PMtmp1-PMtmp4);
    a minimum path metric selecting section for selecting the minimum value (PM) from the path metric values (PMtmp1-PMtmp4) calculated by the path metric calculating sections (401-404), and selecting the path corresponding to the minimum value (PM); and
    a minimum value storage section (460) for temporarily storing the minimum value (PM) selected by the minimum path metric selecting section (450), and outputting the stored minimum value (PM) by following the feedback loop, and
    each of the path metric calculating sections (401-404) calculates the path metric value (PMtmp1-PMtmp4) by calculating branch metric values correspondingly to the combinations of the paths indicative of the state transitions and the plurality of pieces of information (INa, INb), and adding, to the branch metric values, the minimum value (PM) stored at an immediately preceding time in the minimum value storage section (460) coupled to the feedback loop.

4. The diversity apparatus according to claim 3, wherein
    when at least one of the minimum values (PM) is equal to or larger than a predetermined value, the minimum value storage section (460) multiplies all of the minimum values (PM) selected in the ACS sections (41-44) by a predetermined factor, and stores the multiplied minimum values.

5. The diversity apparatus according to claim 1, wherein
    the plurality of pieces of information (INa, INb) received by the path selecting section (4) are reliability information obtained by carrying out predetermined processing on the convolutionally-encoded information received by the receiving sections (1a, 1b 2a, 2b).

6. A diversity method for receiving information subject to convolutional encoding from different input routes and carrying out error correction, comprising:

    a receiving step (1a, 1b 2a, 2b, S1 S2) of receiving signals including the same convolutionally-encoded information from the different input routes, and outputting a plurality of pieces of information (INa, INb);
    a selecting step (4, S3) of using the plurality of pieces of information (INa, INb) received in the receiving step (1a, 1b 2a, 2b, S1, S2) to select a path indicative of state transitions of the convolutional encoding and to simultaneously select one piece of information from the plurality of pieces of information (INa, INb); and
    a path storing step (5, S4) of storing the path selected in the path selecting step (4, S3), and carrying out error correction.

7. The diversity method according to claim 6, wherein
    the path selecting step (4, S3) includes

a path metric calculating step (401-404, S31) of calculating path metric values (PMtmp1-PMtmp4) corresponding to combinations of paths indicative of the state transitions and the plurality of pieces of information (INa, INb);

a minimum path metric selecting step (450, S32) of selecting a minimum value (PM) from the path metric values (PMtmp1-PMtmp4) calculated in the path metric calculating step (401-404, S31); and

a path extracting step (450, S36) of extracting a path corresponding to the minimum value (PM) selected in the minimum path metric selecting step (450, S32), and

in the path storing step (5, S4), the path extracted in the path extracting step (450, S36) is stored correspondingly to a state (St0-St3) of the convolutional encoding, and error correction is carried out.

**8.** The diversity method according to claim 7, wherein

the path selecting step (4, S3) further includes a minimum value storing step (460, S34, S35) of storing the minimum value (PM) selected in the minimum path metric selecting step (450, S32), and

in the path metric calculating step (401-404, S31), path metric values (PMtmp1-PMtmp4) are calculated by calculating branch metric values corresponding to the combinations of the paths indicative of the state transitions and the plurality of pieces of information (INa, INb), and adding, to the branch metric values, the minimum value (PM) stored at an immediately preceding time in the minimum value storing step (460, S34, S35).

**9.** The diversity method according to claim 8, wherein

in the minimum value storing step (460, S34, S35), when at least one of the minimum values (PM) is equal to or larger than a predetermined value, all of the minimum values (PM) are multiplied by a predetermined factor.

**10.** The diversity method according to claim 6, wherein

the plurality of pieces of information (INa, INb) used in the path selecting step (4, S3) are reliability information obtained by carrying out predetermined processing on the convolutionally-encoded information received in the receiving step (1a, 1b, 2a, 2b, S1, S2).

F I G. 1

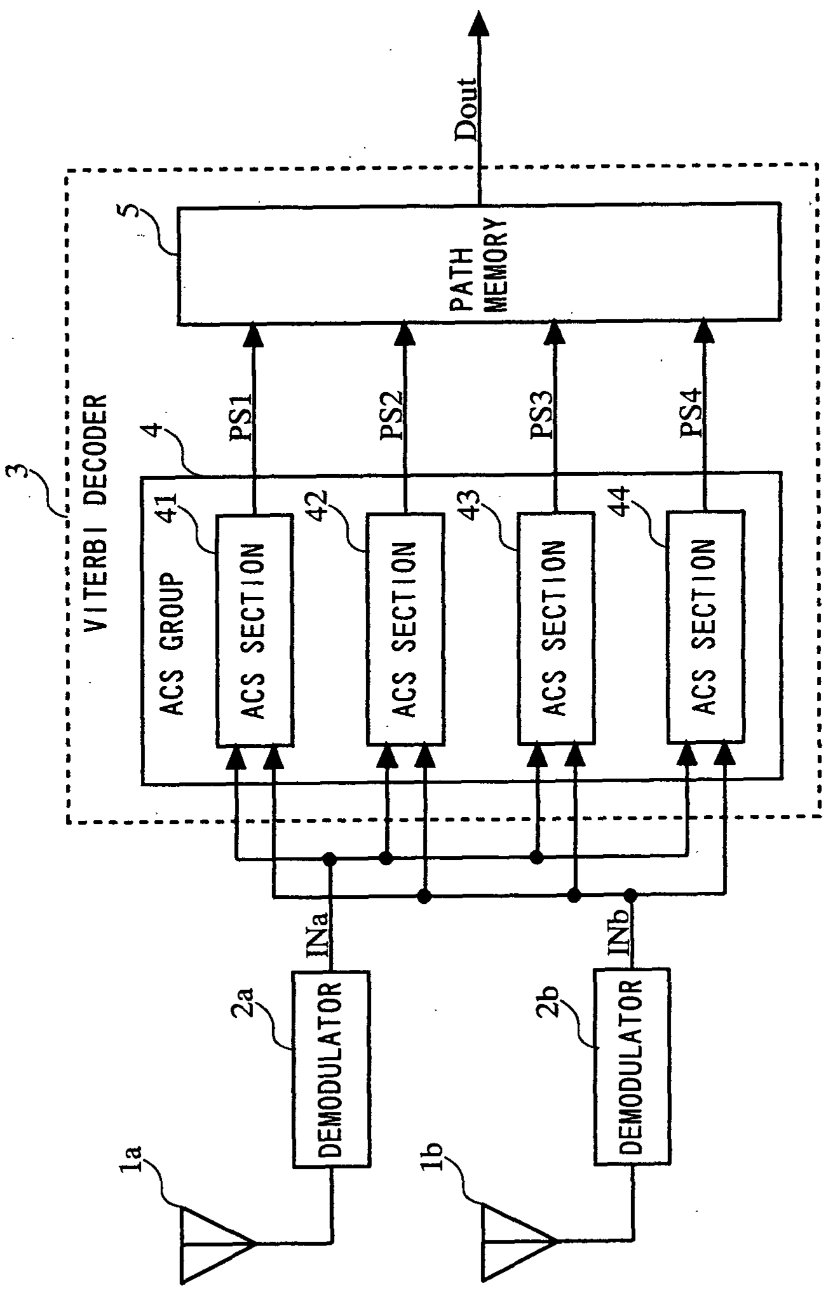
3
VITERBI DECODER
4
ACS GROUP
41
ACS SECTION
42
ACS SECTION
43
ACS SECTION
44
ACS SECTION
PS1
PS2
PS3
PS4
5
PATH MEMORY
Dout
1a
2a
DEMODULATOR
INa
1b
2b
DEMODULATOR
INb

F I G. 2

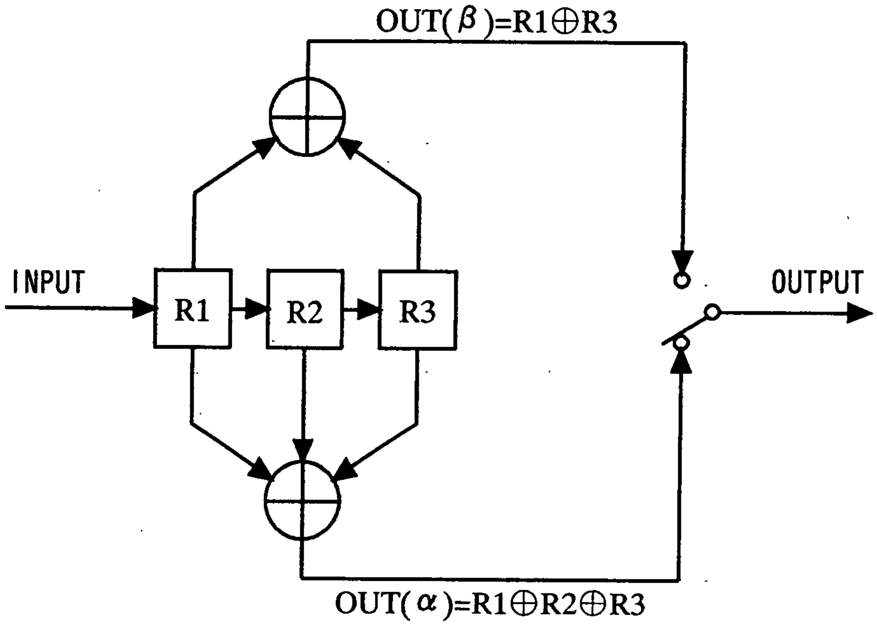


F I G. 3

| | | | | INPUT (R1) | |
|---|---|---|---|---|---|
| | | R2 | R3 | 0 | 1 |
| STATE | St0 | 0 | 0 | 00 | 11 |
| | St1 | 1 | 0 | 10 | 01 |
| | St2 | 0 | 1 | 11 | 00 |
| | St3 | 1 | 1 | 01 | 10 |

OUTPUT :OUT(α)OUT(β)

F I G. 4

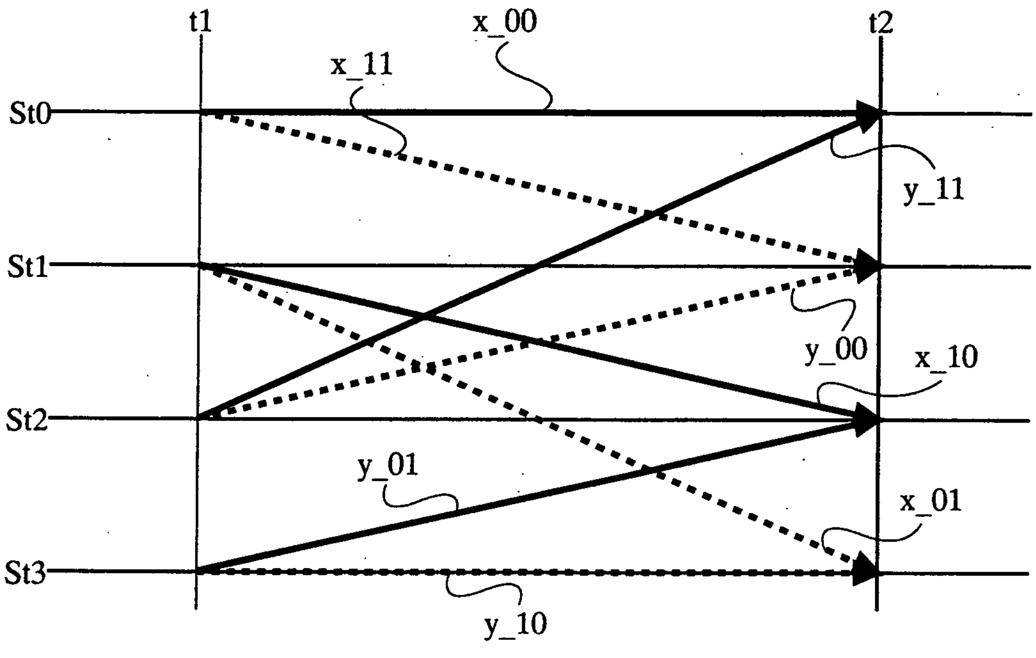

F I G. 5

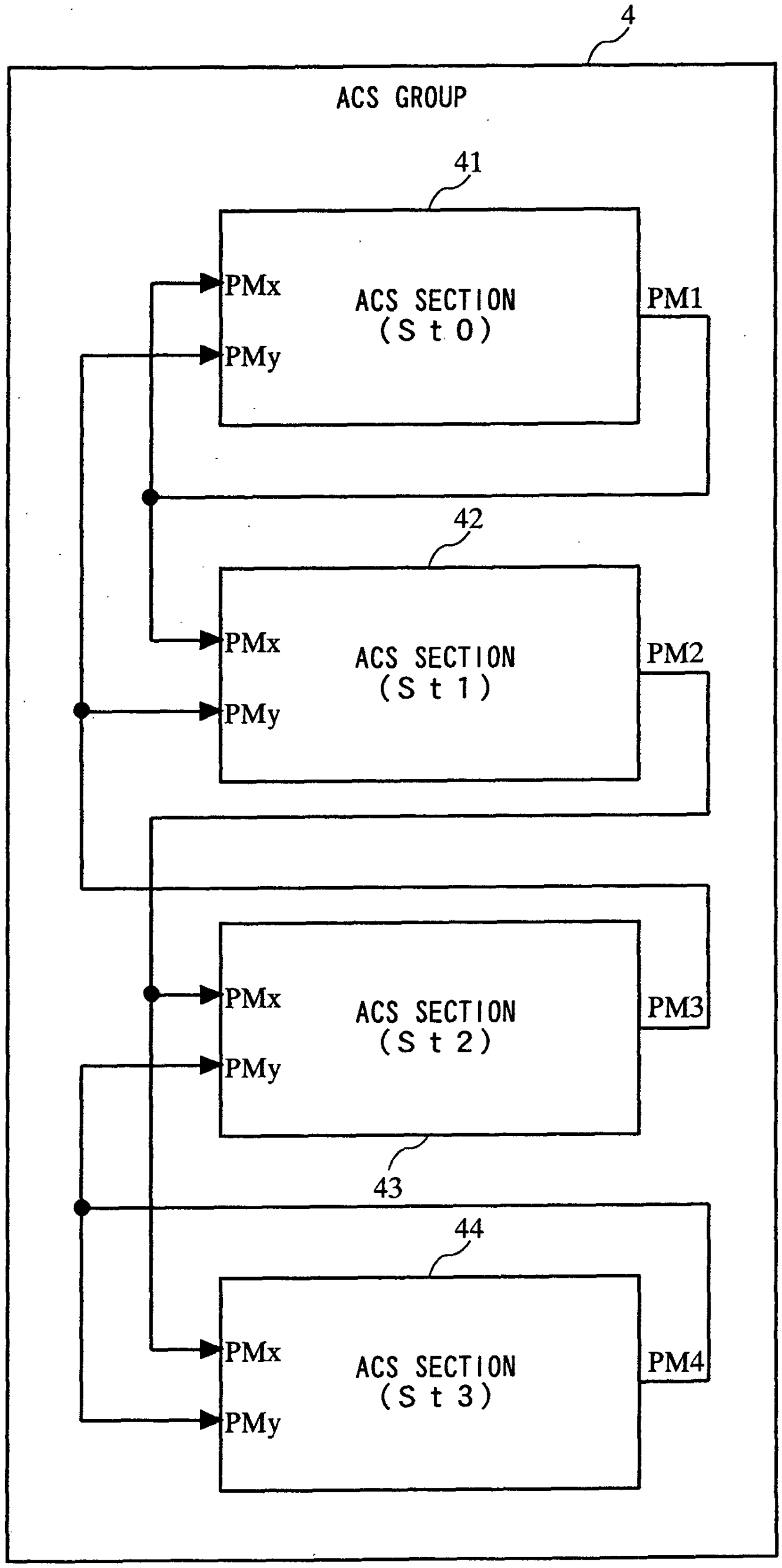
4
ACS GROUP
41
PMx
ACS SECTION
(S t 0)
PM1
PMy
42
PMx
ACS SECTION
(S t 1)
PM2
PMy
PMx
ACS SECTION
(S t 2)
PM3
PMy
43
44
PMx
ACS SECTION
(S t 3)
PM4
PMy

F I G. 6

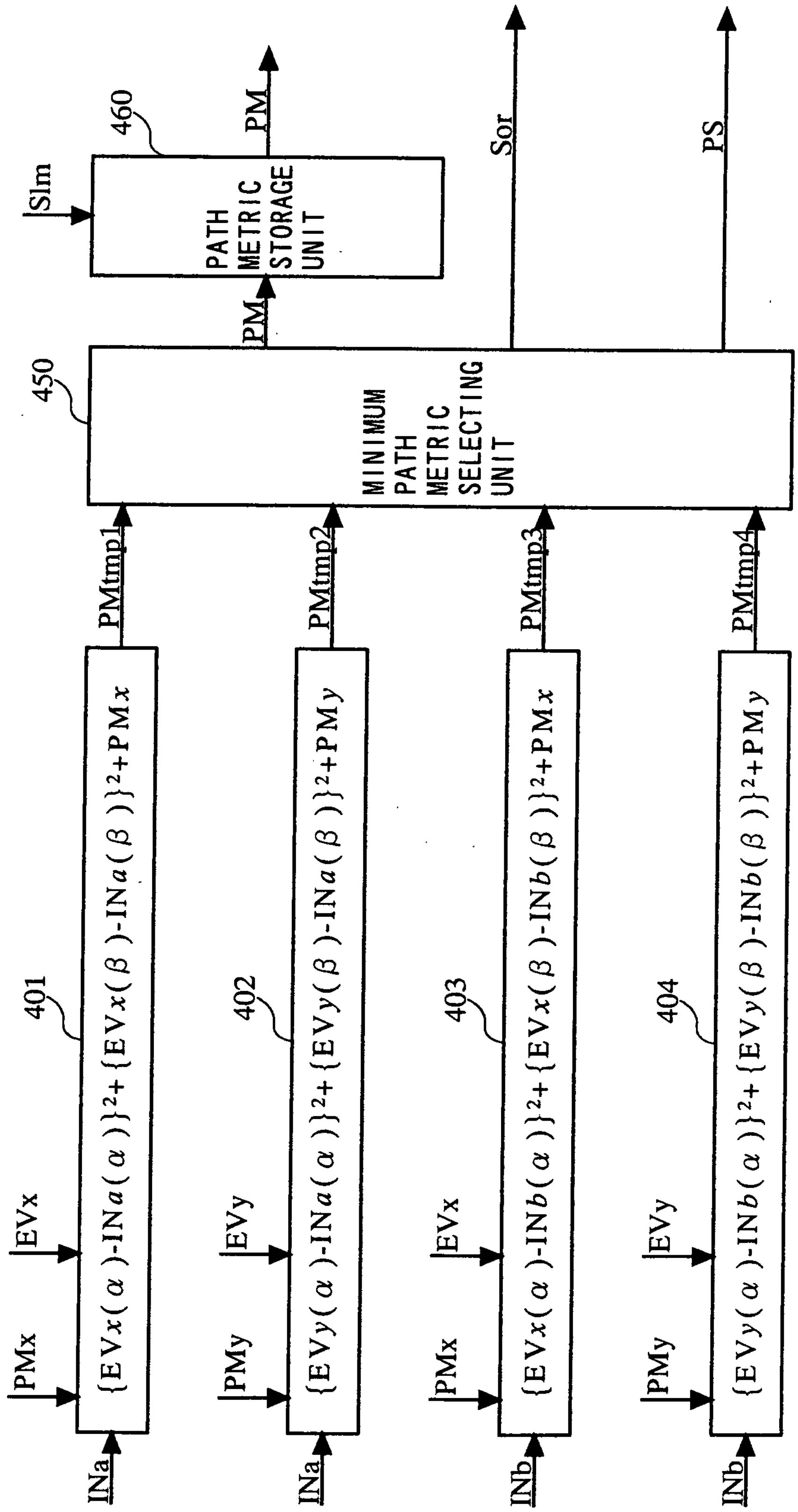
401
402
403
404
450
460
{EVx(α)-INa(α)}²+{EVx(β)-INa(β)}²+PMx
{EVy(α)-INa(α)}²+{EVy(β)-INa(β)}²+PMy
{EVx(α)-INb(α)}²+{EVx(β)-INb(β)}²+PMx
{EVy(α)-INb(α)}²+{EVy(β)-INb(β)}²+PMy
INa
INa
INb
INb
PMx
PMy
PMx
PMy
EVx
EVy
EVx
EVy
PMtmp1
PMtmp2
PMtmp3
PMtmp4
MINIMUM PATH METRIC SELECTING UNIT
PATH METRIC STORAGE UNIT
Slm
PM
PM
Sor
PS

F I G. 7

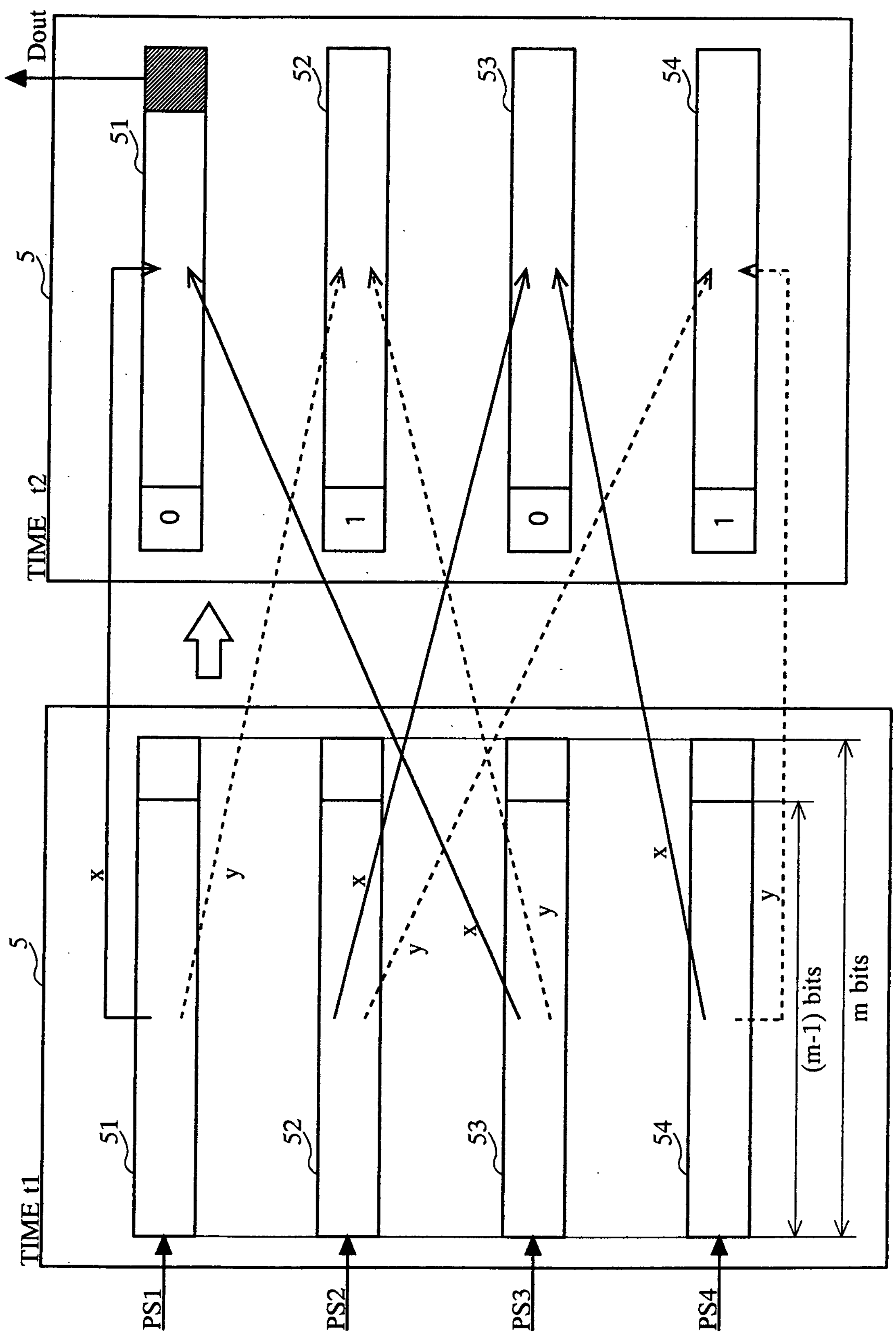
TIME t1
TIME t2
Dout
5
51
52
53
54
PS1
PS2
PS3
PS4
x
y
0
1
(m-1) bits
m bits

F I G. 8

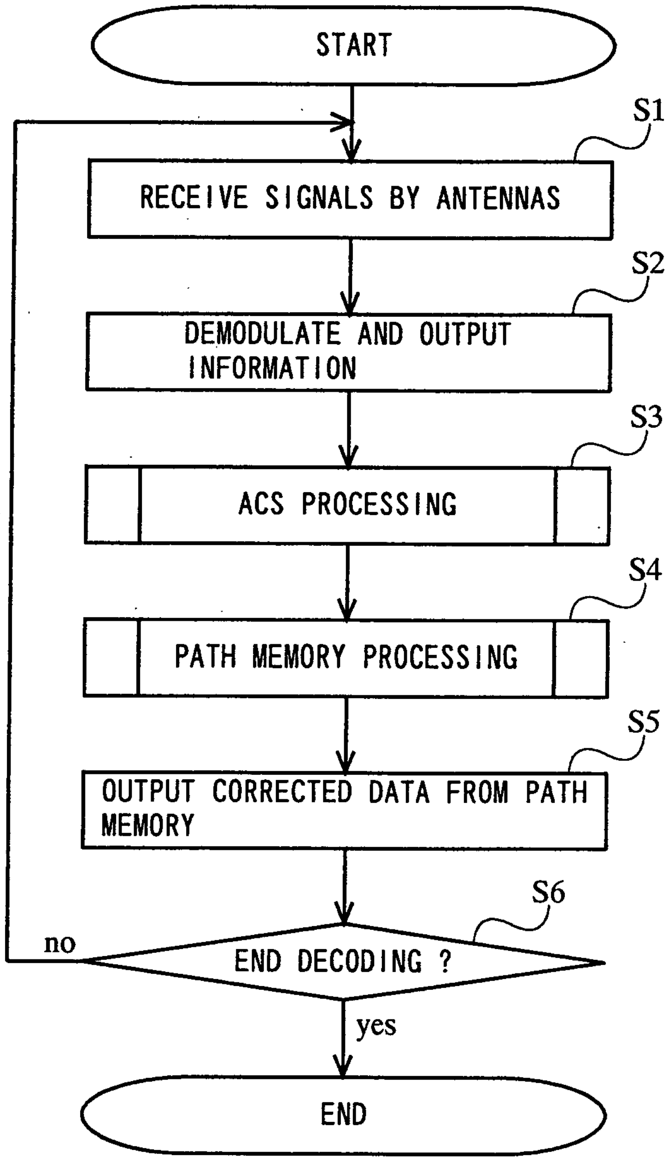
START
S1
RECEIVE SIGNALS BY ANTENNAS
S2
DEMODULATE AND OUTPUT INFORMATION
S3
ACS PROCESSING
S4
PATH MEMORY PROCESSING
S5
OUTPUT CORRECTED DATA FROM PATH MEMORY
S6
END DECODING ?
no
yes
END

F I G. 9

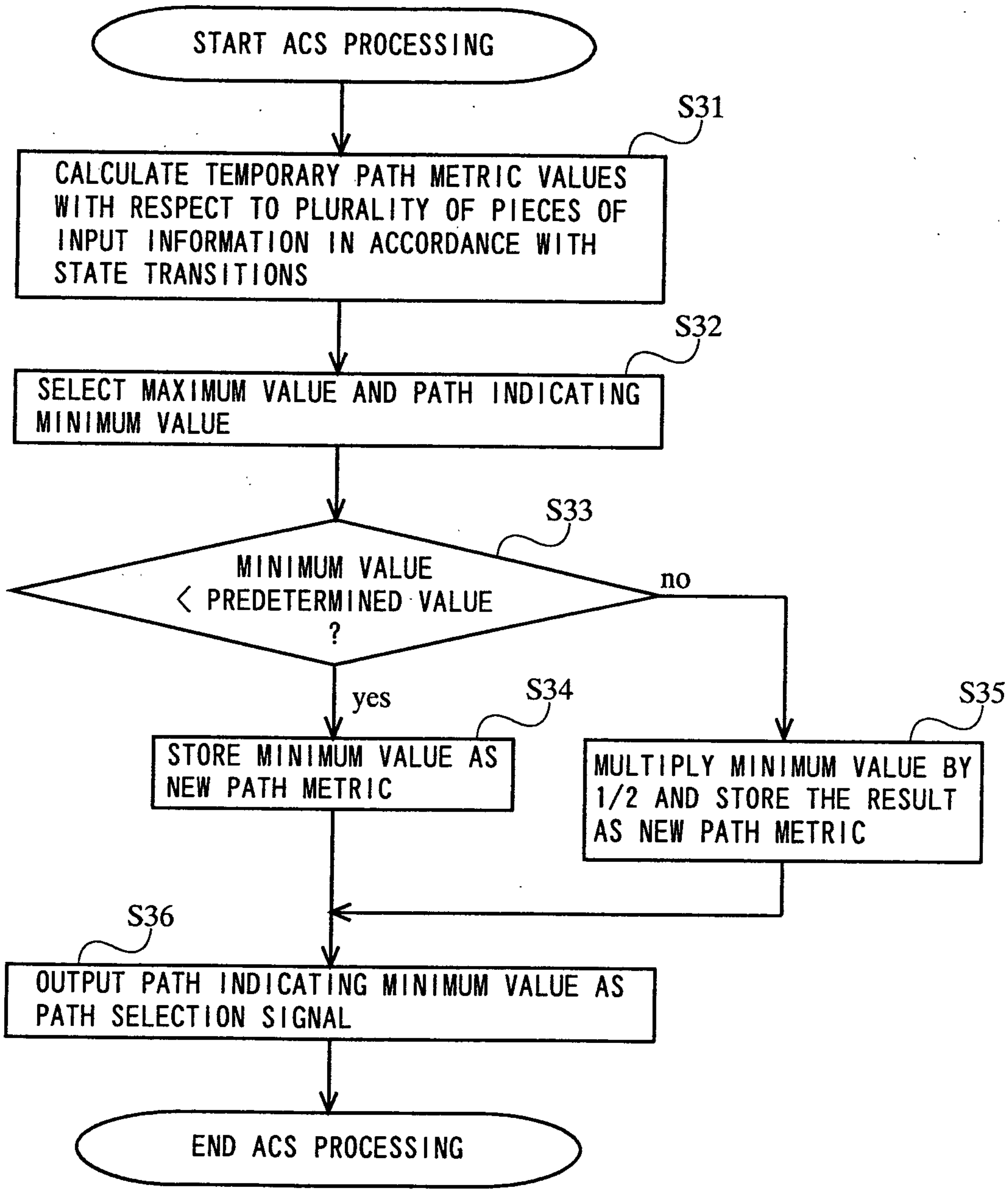
START ACS PROCESSING
S31
CALCULATE TEMPORARY PATH METRIC VALUES WITH RESPECT TO PLURALITY OF PIECES OF INPUT INFORMATION IN ACCORDANCE WITH STATE TRANSITIONS
S32
SELECT MAXIMUM VALUE AND PATH INDICATING MINIMUM VALUE
S33
MINIMUM VALUE
< PREDETERMINED VALUE
?
no
yes
S34
STORE MINIMUM VALUE AS NEW PATH METRIC
S35
MULTIPLY MINIMUM VALUE BY 1/2 AND STORE THE RESULT AS NEW PATH METRIC
S36
OUTPUT PATH INDICATING MINIMUM VALUE AS PATH SELECTION SIGNAL
END ACS PROCESSING

FIG. 10

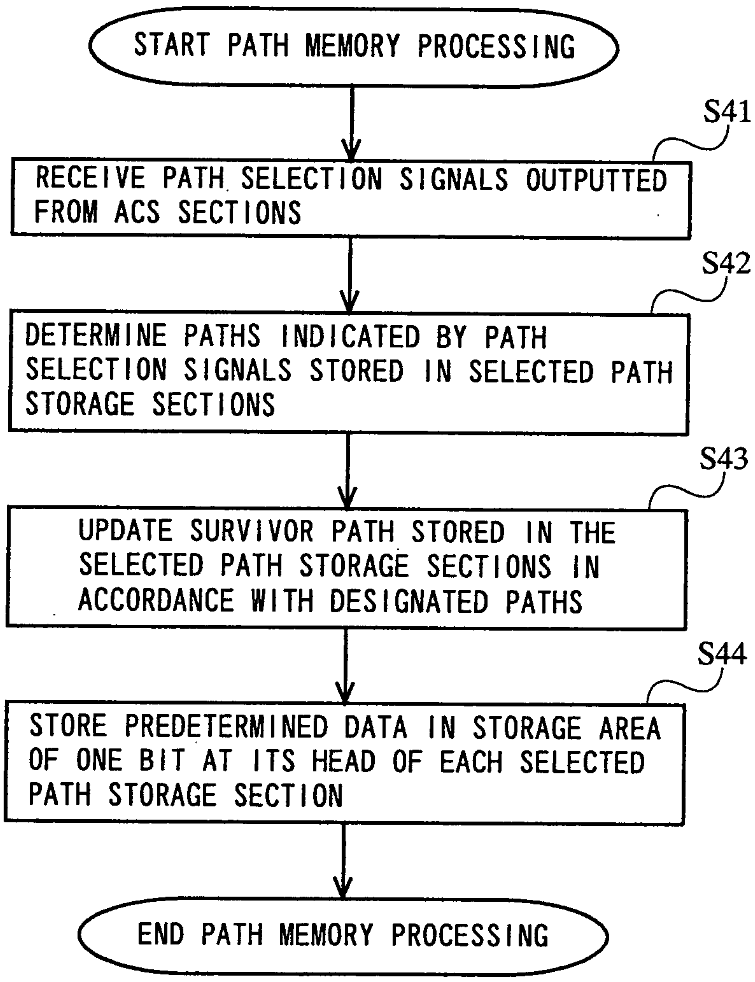
START PATH MEMORY PROCESSING
S41
RECEIVE PATH SELECTION SIGNALS OUTPUTTED FROM ACS SECTIONS
S42
DETERMINE PATHS INDICATED BY PATH SELECTION SIGNALS STORED IN SELECTED PATH STORAGE SECTIONS
S43
UPDATE SURVIVOR PATH STORED IN THE SELECTED PATH STORAGE SECTIONS IN ACCORDANCE WITH DESIGNATED PATHS
S44
STORE PREDETERMINED DATA IN STORAGE AREA OF ONE BIT AT ITS HEAD OF EACH SELECTED PATH STORAGE SECTION
END PATH MEMORY PROCESSING

FIG. 11

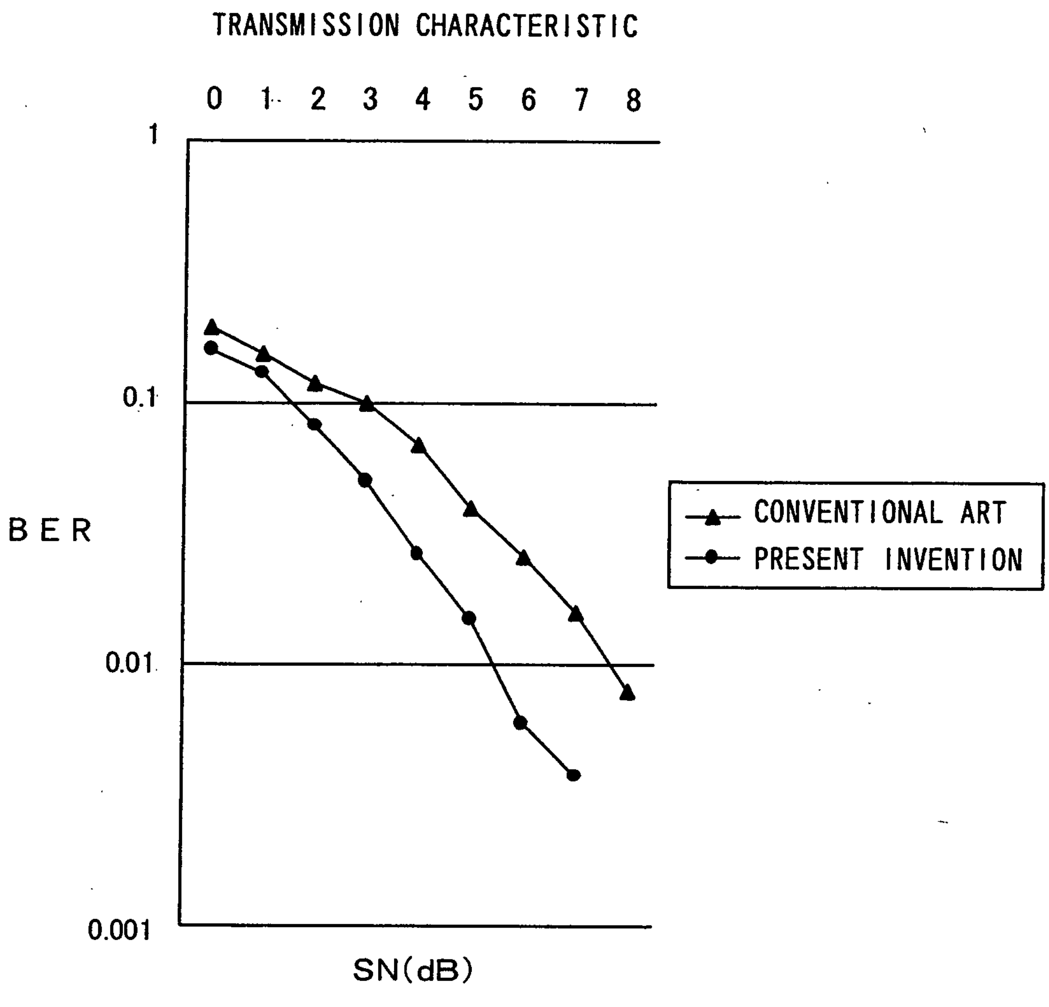
TRANSMISSION CHARACTERISTIC
0 1 2 3 4 5 6 7 8
1
0.1
0.01
0.001
BER
SN(dB)
CONVENTIONAL ART
PRESENT INVENTION

European Patent Office

# EUROPEAN SEARCH REPORT

Application Number
EP 02 02 3115

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | TSUTOMU SAKAI ET AL: "SOFT-DECISION VITERBI DECODING WITH DIVERSITY COMBINING FOR MULTI-BEAM MOBILE SATELLITE COMMUNICATION SYSTEMS" IEEE JOURNAL ON SELECTED AREAS IN COMMUNICATIONS, IEEE INC. NEW YORK, US, vol. 13, no. 2, 1 February 1995 (1995-02-01), pages 285-290, XP000489292 ISSN: 0733-8716 * page 285, left-hand column - page 286, left-hand column; figure 1B * | 1,2,5-7, 10 | H03M13/41 |
| Y | | 3,8 | |
| A | | 4,9 | |
| | --- | | |
| Y | EP 1 024 602 A (NIPPON ELECTRIC CO) 2 August 2000 (2000-08-02) * figure 7 * | 3,8 | |
| | --- | | |
| A | CHANG L F: "Diversity selection using convolutional coding in a portable radio communications channel" GLOBECOM TOKYO '87. IEEE/IECE GLOBAL TELECOMMUNICATIONS CONFERENCE 1987. CONFERENCE RECORD (CAT. NO.87CH2520-5), TOKYO, JAPAN, 15-18 NOV. 1987, pages 802-806 vol.2, XP002226747 1987, New York, NY, USA, IEEE, USA * the whole document * | 1,6 | TECHNICAL FIELDS SEARCHED (Int.Cl.7) H03M |
| | ----- | | |

The present search report has been drawn up for all claims

| Place of search | Date of completion of the search | Examiner |
|---|---|---|
| MUNICH | 13 January 2003 | Burkert, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 02 02 3115

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2003

| Patent document cited in search report | Publication date | Patent family member(s) | Publication date |
|---|---|---|---|
| EP 1024602 A | 02-08-2000 | JP 2000216688 A | 04-08-2000 |
| | | AU 1348800 A | 27-07-2000 |
| | | CN 1264868 A | 30-08-2000 |
| | | EP 1024602 A1 | 02-08-2000 |

EPO FORM P0459

For more details about this annex : see Official Journal of the European Patent Office, No. 12/82